# EUROPÄISCHE PATENTSCHRIFT

(11) **EP 2 217 973 B1**
(45) Veröffentlichungstag und Bekanntmachung des Hinweises auf die Patenterteilung: **16.05.2012**
(21) Anmeldenummer: 08802874.1
(22) Anmeldetag: 13.10.2008
(51) Int. Cl.: G05B 19/042, F03D 7/04

(54) **ANORDNUNG UND VERFAHREN ZUM BETREIBEN EINER WINDENERGIEANLAGE ODER EINES WINDPARKS**
ARRANGEMENT AND METHOD FOR OPERATING A WIND POWER PLANT OR WIND FARM
DISPOSITIF ET PROCÉDÉ D'UTILISATION D'UNE ÉOLIENNE OU D'UN PARC D'ÉOLIENNES

(30) Priorität: 23.10.2007 DE 102007050644
(43) Veröffentlichungstag der Anmeldung: 18.08.2010
(73) Patentinhaber: REpower Systems AG, 22297 Hamburg (DE)
(72) Erfinder: BLUHM, Roman, 28046 Madrid (ES); FRIEDERICH, Sebastian, 24768 Rendsburg (DE); ALTEMARK, Jens, 24768 Rendsburg (DE)
(74) Vertreter: Glawe, Delfs, Moll
(86) Internationale Anmeldenummer: PCT/EP2008/008658
(87) Internationale Veröffentlichungsnummer: WO 2009/052968

(56) Entgegenhaltungen:
- EP-A- 1 519 040
- EP-A- 1 855 173
- US-A- 5 278 773
- US-A1- 2002 029 097

## Beschreibung

Die Erfindung betrifft eine Anordnung und ein Verfahren zum Betreiben einer Windenergieanlage oder eines Windparks. Die Anordnung umfasst eine Steuereinheit und ein Übergabemodul. Die Steuereinheit ist dazu ausgelegt, Steuergrößen zu verarbeiten. Das Übergabemodul umfasst eine Eingangsschnittstelle zum Empfangen von Steuerbefehlen und eine Ausgangsschnittstelle zum Übermitteln von Steuergrößen an die Steuereinheit.

Im Betrieb sind Windenergieanlagen an das elektrische Netz eines Windparks angeschlossen. Windparks sind in das öffentliche Versorgungsnetz eingebunden. Sowohl für die Windenergieanlage als auch für den Windpark muss sichergestellt sein, dass die erzeugte elektrische Energie in einer Form in das jeweilige Netz eingespeist wird, die für das Netz verträglich ist. Die elektrische Energie wird also beispielsweise mit einer bestimmten Frequenz, mit einer bestimmten Spannung sowie mit einem bestimmten Anteil von Blindleistung in das Netz eingespeist.

Die Netzanforderungen sind nicht konstant. So kann das Netz beispielsweise in Zeiten, in denen es unter erhöhter Last steht, die Einspeisung von maximaler Leistung fordern. Wenn die Spannungen im Netz absinkt, kann das Netz zusätzlich einen erhöhten Blindleistungsanteil von der Windenergieanlage verlangen, um die Spannung zu stützen.

Es ist die Aufgabe der Steuereinheit, die Windenergieanlage bzw. den Windpark so zu steuern, dass die elektrische Energie in einer für das Netz verträglichen Weise bereitgestellt wird. Damit die Steuereinheit über die Informationen verfügt, die sie bei dieser Aufgabe zu berücksichtigen hat, werden Steuerbefehle erteilt. Für die Steuereinheit stellt sich der Steuerbefehl als eine Steuergröße dar. Die Steuergrößen werden in der Steuereinheit verarbeitet und die Windenergieanlage bzw. der Windpark in Abhängigkeit von den Steuergrößen gesteuert.

Dokument EP-A-1 519 040 beschreibt eine Anordnung und ein Verfahren um eine Windenergieanlange zu betreiben.

In den Netzen verschiedener Betreiber ist die an die Steuereinheit gerichtete Kommunikation unterschiedlich organisiert. So können die Steuerbefehle beispielsweise bei dem einen Betreiber in digitaler Form übermittelt werden, während der andere Betreiber analoge Steuerbefehle verwendet. Bei einem Betreiber kann der Sollwert für die Blindleistung als prozentualer Anteil von der Gesamtnennleistung definiert sein, während ein anderer Betreiber den entsprechenden Steuerbefehl als Phasenwinkel ϕ zwischen dem eingespeisten Strom und der Netzspannung übermittelt.

Bislang ist es üblich, die Steuereinheiten an die Anforderungen des jeweiligen Betreibers und des jeweiligen Netzes anzupassen. Dies verursacht jedoch erheblichen Aufwand. So muss bei der Herstellung einer Windenergieanlage bzw. bei der Errichtung eines Windparks zunächst bekannt sein, in welchem Netz die Windenergieanlage bzw. der Windpark verwendet wird, bevor die Steuereinheit fertig gestellt werden kann. Für die Wartung bestehender Windenergieanlagen bzw. Windparks muss eine Vielzahl von parallelen Versionen der Steuereinheit gepflegt und weiterentwickelt werden.

Der Erfindung liegt die Aufgabe zu Grunde, eine Anordnung und ein Verfahren der eingangs genannten Art vorzustellen, bei denen die Steuereinheit mit geringerem Aufwand eingerichtet und gewartet werden kann. Die Aufgabe wird gelöst durch die Merkmale der unabhängigen Ansprüche. Vorteilhafte Ausführungsformen finden sich in den Unteransprüchen.

Das Übergabemodul der Anordnung umfasst erfindungsgemäß eine Mehrzahl von Übergabelogiken. Jede Übergabelogik ist dazu ausgelegt, einen Steuerbefehl in eine Steuergröße umzuwandeln. Das Übergabemodul umfasst eine Umschalteinrichtung, mittels derer zwischen den Übergabelogiken umgeschaltet werden kann.

Bei dem erfindungsgemäßen Verfahren werden die Steuergrößen festgestellt, für die die Steuereinheit ausgelegt ist. Es wird festgestellt, welche Steuerbefehle in dem betreffenden Netz für die Steuereinheit vorgesehen sind. In einem Übergabemodul ist eine Mehrzahl von Übergabelogiken bereitgestellt, wobei die Übergabelogiken dazu ausgelegt sind, die Steuerbefehle in Steuergrößen umzuwandeln. Aus der Mehrzahl von Übergabelogiken wird eine passende Übergabelogik ausgewählt.

Zunächst werden einige Begriffe erläutert. Ein Steuerbefehl ist dazu bestimmt, Einfluss auf die Steuereinheit zu nehmen. Der Steuerbefehl ist abhängig von außerhalb der Steuereinheit liegenden Umständen, wie beispielsweise der Qualität der Spannung oder anderen physikalischen Kenngrößen des elektrischen Netzes, der Tageszeit, der Windrichtung oder der Helligkeit. Der Steuerbefehl kann ein Format haben, in dem er von der Steuereinheit nicht verarbeitet werden kann. Eine Steuergröße unterscheidet sich von einem Steuerbefehl dadurch, dass sie in einem Format vorliegt, das einer Bearbeitung durch die Steuereinheit zugänglich ist. Sowohl ein Steuerbefehl als auch eine Steuergröße können mehrere physikalische Stellparameter wie Netzspannung, Blindleistung, Wirkleistung und/oder Frequenz umfassen. Mit einem Steuerbefehl können mehrere Stellparameter parallel zueinander übertragen werden. Von der Erfindung umfasst sind aber auch Steuerbefehle, mit denen in zeitlicher Abfolge wechselnde Stellparameter übertragen werden. Dies kann beispielsweise der Fall sein, wenn bestimmte Stellparameter, von denen die Steuerung abhängt, nicht kontinuierlich übertragen werden, sondern nur zu den Zeitpunkten, zu denen das Netz eine Reaktion von der Windenergieanlage oder dem Windpark erwartet.

Das Übergabemodul ist dazu ausgelegt, Steuerbefehle in Steuergrößen umzuwandeln. Dazu wird ein über eine Eingangsschnittstelle in das Übergabemodul gelangter Steuerbefehl an die zu dem Steuerbefehl passende Übergabelogik übergeben. Die Übergabelogik verarbeitet den Steuerbefehl und wandelt ihn derart um, dass er zu einer Steuergröße wird. Wenn die Steuergröße über die Ausgangsschnittstelle an die Steuereinheit übermittelt wird, kann die Steuereinheit die Windenergieanlage bzw. den Windpark so steuern, wie es gemäß dem Steuerbefehl gewünscht ist.

Mit der Umschalteinrichtung wird zwischen den Übergabelogiken umgeschaltet. Vor dem Umschalten wird ein über die Eingangsschnittstelle in das Übergabemodul gelangter Steuerbefehl einer ersten Übergabelogik zugeleitet und dort verarbeitet. Nach dem Umschalten wird der Steuerbefehl nicht mehr an die erste Übergabelogik, sondern an eine zweite Übergabelogik geleitet und dort verarbeitet.

Die erfindungsgemäße Anordnung hat den Vorteil, dass ab Werk eine standardmäßige Steuereinheit verwendet werden kann, unabhängig davon, in welches Netz die Windenergieanlage bzw. der Windpark eingebunden wird. Die Steuergrößen der Steuereinheit können frei gewählt werden. Für die Einbindung in das Netz wird ein erfindungsgemäßes Übergabemodul zwischen die Windenergieanlage und das Netz geschaltet. In dem Übergabemodul wird diejenige Übergabelogik aktiviert, die für die Umwandlung der Steuerbefehle des betreffenden Netzes in das von der Steuereinheit geforderte Format ausgelegt ist. Die anderen Übergabelogiken sind inaktiv.

Durch die Erfindung kann die Entwicklung und der Betrieb von Windenergieanlagen erheblich rationalisiert werden. Die Abteilung, in der die Steuereinheit entwickelt wird, muss lediglich kommunizieren, in Abhängigkeit von welchen Steuergrößen die Steuereinheit später arbeiten wird. Im Übrigen kann sie sich voll darauf konzentrieren, die Steuereinheit an sich zu entwickeln. Eine andere Entwicklungsabteilung kann sich mit dem Übergabemodul befassen. Dieser Entwicklungsabteilung ist es bekannt, mit welchen Steuergrößen die Steuereinheit arbeitet und welche Steuerbefehle in den unterschiedlichen Netzen verwendet werden. Sie kann für die Steuerbefehle jedes Netzes eine Übergabelogik entwickeln und die Mehrzahl von Übergabelogiken in dem Übergabemodul zusammenführen. Angesichts der Vielzahl von Netzen, die weltweit betrieben werden, kann ein Übergabemodul ohne weiteres 5, 10 oder 20 Übergabelogiken umfassen. Kommt ein weiteres Netz hinzu, so muss lediglich eine Übergabelogik hinzugefügt werden. Ändern sich die Steuerbefehle in einem Netz, so muss lediglich die entsprechende Übergabelogik geändert werden. Die Steuereinheit selbst bleibt in beiden Fällen unverändert.

Die erfindungsgemäße Anordnung kann ihre Vorzüge bereits dann ausspielen, wenn der Steuerbefehl und die Steuergröße jeweils lediglich einen einzelnen Stellparameter umfassen. Im einfachsten Fall ist der Stellparameter in beiden Fällen der gleiche und der Unterschied beschränkt sich darauf, dass der Stellparameter in dem Steuerbefehl auf eine andere Weise repräsentiert ist, als es für die Steuergröße gefordert ist. So kann es beispielsweise sein, dass der Stellparameter im Steuerbefehl durch ein analoges elektrisches Signal zwischen 0 und 20 mA repräsentiert ist, während die Steuergröße eine analoge Skala von 4 bis 20 mA verwendet. Die Übergabelogik muss dann lediglich eine proportionale Umrechnung vornehmen. Es kann auch ein nicht-proportionaler Zusammenhang zwischen dem Stellparameter des Steuerbefehls und dem Stellparameter der Steuergröße bestehen. Dies kann beispielsweise der Fall sein, wenn der Steuerbefehl einen Sollwert für die Blindleistung in Form eines bestimmten Phasenwinkel ϕ zwischen dem eingespeisten Strom und der Netzspannung vorgibt, während als Steuergröße ein Anteilsfaktor verarbeitet wird, der den Anteil der Blindleistung an der Gesamtnennleistung wiedergibt. Alternative Stellparameter, die die Blindleistung repräsentieren können, sind sin ϕ, cos ϕ oder tan ϕ. Der Steuerbefehl kann aber auch eine Größe repräsentieren, über die mittels eines funktionalen Zusammenhangs die Steuergröße abgeleitet werden kann. Beispielsweise kann der Steuerbefehl die Spannung des angeschlossenen elektrischen Netzes repräsentieren und die Übergabelogik mittels einer Funktion oder einer Wertetabelle die Steuergröße Blindleistung ermitteln und die Spannung in einem definierten Spannungsbereich halten.

In vielen Fällen hängt ein einzelner Stellparameter der Steuergröße von einer Mehrzahl von im Steuerbefehl enthaltenen Stellparametern ab. So kann etwa der als Steuergröße verwendete Sollwert für die Blindleistung zum einen von den elektrischen Kennwerten des Netzes abhängen, beispielsweise indem eine höhere Blindleistung angefordert wird, wenn die Spannung im Netz absinkt. Ferner kann der Sollwert für die Blindleistung auch von der Tageszeit oder der Helligkeit abhängen, etwa weil zu bestimmten Tageszeiten regelmäßig viel Blindleistung erforderlich ist. Es kann dann eine Übergabelogik vorgesehen sein, die einen Steuerbefehl, der eine Mehrzahl von Stellparametern umfasst, in eine Steuergröße umwandelt, die lediglich einen Stellparameter umfasst.

Umgekehrt kann auch eine Mehrzahl von Stellparametern der Steuergröße von einem einzelnen Stellparameter eines Steuerbefehls abhängen. Wird etwa durch den Steuerbefehl ein Umschalten der Windenergieanlage vom Tagmodus auf den Nachtmodus vorgegeben, so kann dies einerseits einen veränderten Sollwert für die Blindleistung und andererseits eine Umstellung auf geräuschreduzierten Betrieb bedingen. Es können folglich Übergabelogiken vorgesehen sein, bei denen der Steuerbefehl einen einzelnen Stellparameter umfasst, während die Steuergröße eine Mehrzahl von Stellparametern umfasst. Dies betrifft auch den Fall, dass die Änderung eines einzelnen Stellparameters im Steuerbefehl nach Überschreiten eines vorgegebenen Grenzwerts eine andere Reaktion der Steuereinheit erfordert als im normalen Betrieb. So soll etwa bei Absinken der Netzspannung in Abhängigkeit von der Abweichung der Netzspannung zu ihrem Nennwert die Windenergieanlage unterschiedlich lange mit dem Netz verbunden bleiben und unterschiedlich viel Blindstrom einspeisen, um zu einer Stabilisierung der Spannung beizutragen. Sinkt die Spannung auf einen Wert von weniger als 80 % der normalen Spannung, so muss die Windenergieanlage spätestens nach 3 Sekunden vom Netz getrennt sein und einen ersten Blindstrom einspeisen. Bei einem Spannungsabfall auf 15 % des Normalwerts darf die Windenergieanlage nicht länger als 150 ms mit dem Netz verbunden bleiben und soll dafür aber einen höheren zweiten Blindstrom einspeisen. Auch Abläufe dieser Art können von einer Übergabelogik in die passenden Steuergrößen umgewandelt werden. In diesem Zusammenhang kann es insbesondere als Stellparameter berücksichtigt werden, wer der Betreiber des Netzes ist oder in welchem Land das Netz eingerichtet ist, weil sich die Abläufe bei Überschreiten eines Grenzwerts je nach Betreiber und je nach Land unterscheiden. Diese Abläufe können in der Übergabelogik hinterlegt sein und der Steuerbefehl kann eine Regionalkennung als Stellparameter umfassen, so dass der zum regionalen Netz passende Ablauf gewährleistet ist.

Von der Erfindung umfasst sind auch Übergabelogiken, bei denen sowohl der Steuerbefehl als auch die Steuergröße eine Mehrzahl von Stellparametern umfassen. Das Übergabemodul kann so ausgestaltet sein, dass die Steuerbefehle bzw. die Steuergrößen der Übergabelogiken jeweils dieselbe Anzahl von Stellparametern umfassen. Es kann aber auch eine Mehrzahl von Übergangslogiken in einem Übergabemodul miteinander kombiniert werden, bei denen die Anzahl der Stellparameter im Steuerbefehl bzw. in der Steuergröße unterschiedlich ist. Ebenfalls möglich ist es, in einer Übergabelogik mehrere Steuerbefehle parallel zu verarbeiten.

Das Übergabemodul kann so ausgestaltet sein, dass eine einzelne Übergabelogik des Übergabemoduls alle in einer bestimmten Netzumgebung der Windenergieanlage bzw. des Windparks vorkommenden Steuerbefehle verarbeiten und in Steuergrößen umwandeln kann. Die betreffende Übergabelogik wird dann bei der Inbetriebnahme aktiviert und ein Umschalten auf eine andere Übergabelogik ist bei normalem Ablauf nicht mehr erforderlich. Die Übergabelogiken können ab Werk fest in dem Übergabemodul implementiert sein. Es kann ausreichen, wenn ein Umschalten zwischen den Übergabelogiken nur durch eine Bedienperson vor Ort möglich ist.

Eine einzelne Übergabelogik für alle Arten von Steuerbefehlen und Betriebszuständen kann sehr komplex ausfallen. Von der Erfindung umfasst ist deswegen auch der Gedanke je nach Betriebszustand zwischen den Übergabelogiken umzuschalten. Beispielsweise kann eine Übergabelogik für den Tagbetrieb und eine Übergabelogik für den Nachtbetrieb vorgesehen sein. In Abhängigkeit von der Uhrzeit oder von der Helligkeit kann dann zwischen den Übergabelogiken umgeschaltet werden. Die Umschalteinrichtung kann dazu ausgelegt sein, auf entsprechende Vorgaben von einer Leitstelle oder Signale von einem Sensor zu reagieren. Ebenfalls möglich ist es, dass eine Übergabelogik für den Normalbetrieb und eine andere Übergabelogik für Störfälle bestimmt ist. Überschreitet dann ein Stellparameter, wie beispielsweise die Netzspannung einen vorgegebenen Grenzwert, wird auf die Übergabelogik für Störfälle umgeschaltet.

Es kann auch vorgesehen sein, dass die Übergabelogiken des Übergabemoduls verändert werden oder dass neue Übergabelogiken zu dem Übergabemodul hinzugefügt werden. Eine geänderte Übergabelogik kann beispielsweise erforderlich sein, wenn die Windenergieanlage eine neue Steuereinheit erhält, die für andere Steuergrößen ausgelegt ist, oder wenn sich die Steuerbefehle ändern. In einer vorteilhaften Ausführungsform kann eine Übergabelogik verändert werden, ohne dass die Anwesenheit einer Bedienperson vor Ort erforderlich ist. Die Daten für die geänderte Übergabelogik können von einem Kontrollzentrum aus über eine Datenleitung zu der Steuereinheit übermittelt werden.

Das Verändern einer aktiven Übergabelogik ist nicht möglich, ohne die Windenergieanlage während dieser Zeit außer Betrieb zu setzen. Anstatt die aktive Übergabelogik zu verändern, kann es deswegen vorteilhaft sein, eine neue Übergabelogik zu dem Übergabemodul hinzuzufügen. Nach vollständiger Übertragung der neuen Übergabelogik kann von der bisherigen Übergabelogik auf die neue Übergabelogik umgeschaltet werden. Insbesondere zu diesem Zweck kann die Umschalteinrichtung fernbedienbar sein. Auch die Schritte des Hinzufügens oder des Löschens von Übergabelogiken können in Fernbedienung durchgeführt werden. Dazu ist in dem Übergabemodul ein Speicherbereich vorgesehen, in den die für eine Übergabelogik erforderlichen Daten über eine Datenleitung übertragen werden können.

Es kann auch ein Signalfluss in umgekehrter Richtung, also von der Windenergieanlage bzw. dem Windpark zu dem Netz vorgesehen sein. Es wird dann eine in der Windenergieanlage oder in dem Windpark festgestellte Zustandsgröße an das Netz übermittelt, damit der Zustand der Windenergieanlage bzw. des Windparks bei der Erteilung von Steuerbefehlen berücksichtigt werden kann. Beispielsweise kann die Anordnung eine Meldeeinrichtung umfassen, mittels derer die Information über die verfügbare Blindleistung an das jeweilige Netz übermittelt werden kann. Die Information über die verfügbare Blindleistung kann dann in den Steuerbefehlen berücksichtigt werden, so dass nicht mehr Blindleistung von der Windenergieanlage bzw. dem Windpark gefordert wird, als verfügbar ist. Es muss berücksichtigt werden, dass die für das Netz tatsächlich verfügbare Blindleistung geringer ist als die von der Windenergieanlage abgegebenen Blindleistung, da ein Teil der Blindleistung in den sonstigen Betriebsmitteln der Anordnung, wie Transformator und Kabel, verloren geht. Es kann eine direkte Signalverbindung zwischen der Windenergieanlage bzw. dem Windpark und dem Netz bestehen, über die die Zustandsgröße an das Netz übermittelt werden. Möglich ist es aber auch, auch die Information über die Zustandsgröße durch das Übergabemodul zu leiten und dort in ein Format umzuwandeln, in der sie vom Netz verarbeitet werden kann. Das Übergabemodul kann also auch einen Signalfluss in entgegengesetzter Richtung verarbeiten.

Die erfindungsgemäße Steuereinheit kann die Steuereinheit einer Windenergieanlage sein. Die Steuereinheit kann in der Windenergieanlage angeordnet sein, zwingend ist dies jedoch nicht. Die Erfindung betrifft auch eine Windenergieanlage, die eine solche Steuereinheit und ein erfindungsgemäßes Übergabemodul umfasst, sowie eine Anordnung mit einer Windenergieanlage, einer Steuereinheit und einem erfindungsgemäßen Übergabemodul. Die Steuerbefehle hängen dann in erster Linie von den Vorgaben des Parkmasters und vom Zustand des windparkinternen Netzes ab. Die Steuerbefehle können aber auch von den Gegebenheiten abhängen, die unmittelbar bei der Windenergieanlage festgestellt werden. So kann etwa die Windrichtung oder die Helligkeit mit einem Sensor festgestellt werden, der an der Windenergieanlage angeordnet ist. Von der Erfindung umfasst ist der Gedanke, Steuerbefehle, die von solchen lokal festgestellten Gegebenheiten abhängen, zusammen mit Steuerbefehlen des Netzes in das Übergabemodul zu leiten und dort gemeinsam zu verarbeiten.

In einer alternativen Ausführungsform ist die Steuereinheit die Steuereinheit eines Parkmasters. Als Parkmaster wird jede Einrichtung bezeichnet, die Leitungsaufgaben für einen Windpark, also eine Mehrzahl von Windenergieanlagen, übernimmt. Insbesondere kann der Parkmaster die Verknüpfung zwischen dem Windpark und dem öffentlichen Stromversorgungsnetz herstellen. Die Steuereinheit kann am Parkmaster oder an einem anderen Ort angeordnet sein. Die Steuerbefehle hängen in diesem Fall vorwiegend vom Zustand des öffentlichen Versorgungsnetzes bzw. von den Vorgaben des Betreibers ab. Die Erfindung betrifft auch einen Windpark mit einem Parkmaster, einer solchen Steuereinheit und einem erfindungsgemäßen Übergabemodul.

Die Erfindung wird nachfolgend unter Bezugnahme auf die beigefügten Zeichnungen anhand einer vorteilhaften Ausführungsform beispielhaft beschrieben. Es zeigen:
- Fig. 1: eine erste Ausführungsform einer erfindungsgemäßen Anordnung;
- Fig. 2: ein erfindungsgemäßes Übergabemodul; und
- Fig. 3: eine zweite Ausführungsform einer erfindungsgemäßen Anordnung.

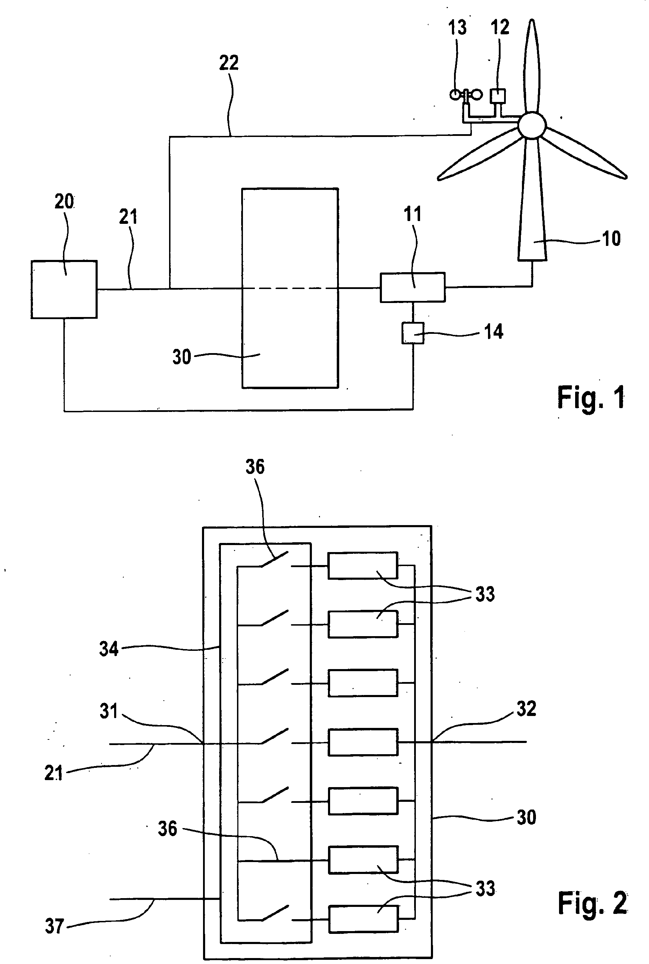

Eine Windenergieanlage 10 in Fig. 1 ist in einen nicht dargestellten Windpark eingebunden. Eine Steuereinheit 11 der Windenergieanlage 10 ist dazu ausgelegt, Steuergrößen zu verarbeiten und die Windenergieanlage 10 in Abhängigkeit von den Steuergrößen zu steuern. Ein Parkmaster 20, der Leitungsaufgaben für den Windpark übernimmt und eine Verknüpfung zum öffentlichen Versorgungsnetz herstellt, generiert Steuerbefehle und macht damit Vorgaben für die Steuereinheit 11 der Windenergieanlage 10. Ein Steuerbefehl kann beispielsweise eine Vorgabe für die Blindleistung oder die Wirkleistung betreffen. Die Steuerbefehle werden von dem Parkmaster 20 in einem Format ausgegeben, das nicht mit dem Format der Steuergrößen der Steuereinheit 11 übereinstimmt. In dem von dem Parkmaster 20 verwendeten Format kann die Steuereinheit 11 die Steuerbefehle also nicht verarbeiten.

Die Steuerbefehle von dem Parkmaster 20 werden deswegen zunächst über eine Steuerleitung 21 an ein Übergabemodul 30 übermittelt. Ein in Fig. 2 dargestelltes Übergabemodul 30 umfasst eine Eingangsschnittstelle 31, über die die Steuerbefehle in das Übergabemodul 30 gelangen. In dem Übergabemodul 30 werden die Steuerbefehle so umgewandelt, dass sie von der Steuereinheit 11 verarbeitet werden können. Das Übergabemodul 30 wandelt die Steuerbefehle also in Steuergrößen um. Über eine Ausgangsschnittstelle 32 des Übergabemoduls 30 werden die Steuergrößen an die Steuereinheit 11 übermittelt.

Zum Umwandeln der Steuerbefehle in Steuergrößen umfasst das Übergabemodul eine Mehrzahl von Übergabelogiken 33. Die Übergabelogiken 33 sind jeweils dazu ausgelegt, unterschiedliche Arten von Steuerbefehlen in Steuergrößen umzuwandeln.

Es wird diejenige Übergabelogik 33 des Übergabemoduls 30 ausgewählt, die zu den Steuerbefehlen des Parkmasters 20 passt. Die betreffende Übergabelogik 33 wird aktiviert, die übrigen Übergabelogiken 33 bleiben inaktiv. Zum Umschalten zwischen den Übergabelogiken 33 ist eine Umschalteinrichtung 34 vorgesehen, die eine Mehrzahl von Schaltern 36 umfasst. Eine Übergabelogik 33 wird aktiviert, indem der zugehörige Schalter 36 geschlossen wird. Die Schalter 36 sind durch die Umschalteinrichtung 34 derart miteinander gekoppelt, dass die übrigen Schalter 36 geöffnet bleiben, wenn einer der Schalter 36 geschlossen ist. Es ist also immer genau ein Übergabemodul 33 aktiv. Die Umschalteinrichtung kann Steuersignale über eine Signalleitung 37 empfangen und entsprechend den Steuersignalen zwischen den Übergabelogiken 33 umschalten. Das Steuersignal kann ein Befehl von einer Leistelle oder ein Signal von einem Sensor oder vom Netz oder ein im Übergabemodul einstellbarer Wert sein. Ebenfalls möglich ist es, die Übergabelogiken 33 über die Signalleitung von der Leitstelle aus zu verändern oder weitere Übergabelogiken 33 zu dem Übergabemodul 30 hinzuzufügen.

Soll das Übergabemodul 30 mit anderen Steuerbefehlen betrieben werden, so wird der Schalter 34 der bisher aktiven Übergabelogik 33 geöffnet und der Schalter 34 der zu den neuen Steuerbefehlen passenden Übergabelogik 33 geschlossen. Es ist also möglich, zwischen den Übergabelogiken 33 umzuschalten.

Die Windenergieanlage 10 umfasst einen Beleuchtungssensor 12 und einen Windstärkemesser 13. Die Ausgangssignale des Beleuchtungssensors 12 und des Windstärkemessers 13 sind ebenfalls Steuerbefehle, die die Steuereinheit 11 beim Steuern der Windenergieanlage 10 berücksichtigt. Die Signale werden über eine Steuerleitung 22 an die Eingangsschnittstelle 31 des Übergabemoduls 30 geleitet und in dem Übergabemodul 30 zusammen mit den Steuerbefehlen des Parkmasters 20 verarbeitet.

Die Steuereinheit 11 umfasst eine Funktion, mit der festgestellt wird, wie viel Blindleistung die Windenergieanlage 10 liefern kann. Über eine Meldeeinrichtung 14 wird die verfügbare Blindleistung an den Parkmaster 20 gemeldet. Der Parkmaster 20 richtet seine Vorgabe für die Blindleistung daran aus, wie viel Blindleistung verfügbar ist.

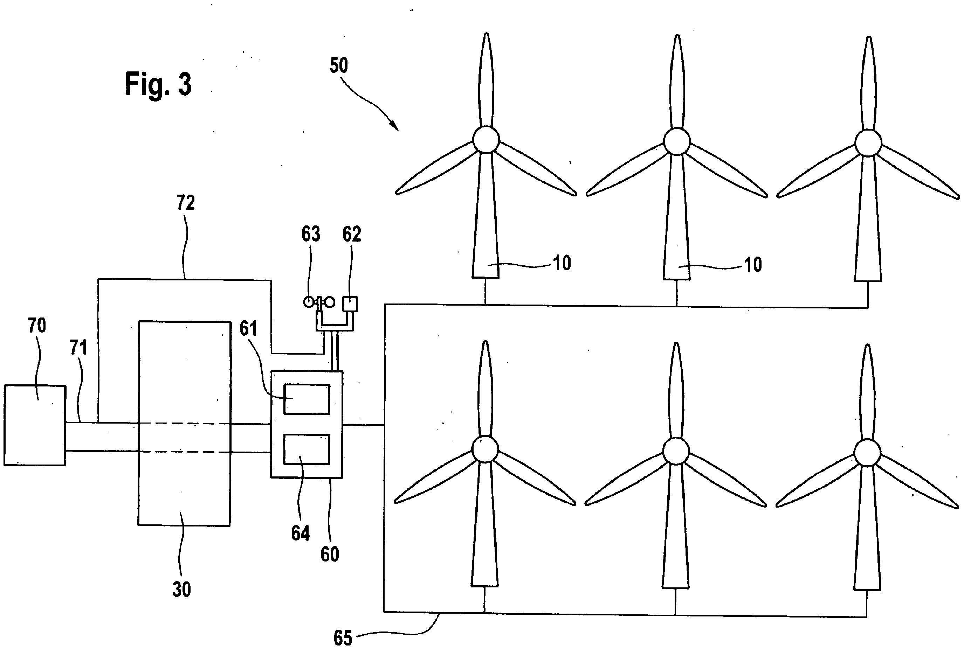

Fig. 3 zeigt eine andere Ausführungsform einer erfindungsgemäßen Anordnung. Eine Mehrzahl von Windenergieanlagen 10 ist zu einem Windpark 50 zusammengeschlossen. Ein Parkmaster 60 ist über eine Steuerleitung 65 mit den Windenergieanlagen 10 des Windparks 50 verbunden. Der Parkmaster 60 umfasst eine Steuereinheit 61 und eine Meldeeinrichtung 64.

Ein Kontrollzentrum 70 des öffentlichen Versorgungsnetzes macht über Steuerbefehle Vorgaben an die Steuereinheit 61 bezüglich der Steuerung des Windparks 50. Die Steuerbefehle des Kontrollzentrums 70 liegen in einem Format vor, das nicht mit dem Format der Steuergrößen, die von der Steuereinheit 61 verarbeitet werden können, übereinstimmt. Die Steuerbefehle werden deswegen zunächst über eine Steuerleitung 71 in das Übergabemodul 30 geleitet und dort in Steuergrößen für die Steuereinheit 61 umgewandelt.

Der Parkmaster 60 umfasst ferner einen Beleuchtungssensor 62 und einen Windmesser 63. Die Ausgangssignale des Beleuchtungssensors 62 und des Windmessers 63 werden ebenfalls als Steuerbefehle bei der Steuerung des Windparks 50 berücksichtigt. Dazu werden die Ausgangssignale über eine Steuerleitung 72 zu dem Übergabemodul 30 geleitet und dort zusammen mit den Steuerbefehlen des Kontrollzentrums 70 verarbeitet.

Die Meldeeinrichtung 64 des Parkmasters 60 übermittelt an das Kontrollzentrum 70 die Zustandsinformationen aus dem Windpark, zum Beispiel wie viel Blindleistung der Windpark 50 liefert und noch liefern könnte. Die Signale von der Meldeeinrichtung 64 werden durch das Übergabemodul hindurch geleitet und in dem Übergabemodul in ein Format umgewandelt, in dem sie von dem Kontrollzentrum 70 verarbeitet werden können. Das Kontrollzentrum 70 berücksichtigt beim Anfordern von Blindleistung die von der Meldeeinrichtung 64 erhaltene Information.

## Patentansprüche

1. Anordnung zum Betreiben einer Windenergieanlage (10) oder eines Windparks (50), umfassend eine Steuergrößen verarbeitende Steuereinheit (11, 61) und ein Übergabemodul (30) mit einer Eingangsschnittstelle (31) zum Empfangen von Steuerbefehlen und einer Ausgangsschnittstelle (32) zum Übermitteln von Steuergrößen an die Steuereinheit (11, 61), **dadurch gekennzeichnet, dass** das Übergabemodul (30) eine Mehrzahl von Übergabelogiken (33) umfasst, wobei jede Übergabelogik (33) dazu ausgelegt ist, einen Steuerbefehl in eine Steuergröße umzuwandeln, und dass das Übergabemodul (33) eine Umschalteinrichtung (34) zum Umschalten zwischen den Übergabelogiken (33) umfasst.

2. Anordnung nach Anspruch 1, **dadurch gekennzeichnet, dass** der Steuerbefehl einen einzelnen Stellparameter umfasst und dass die Steuergröße einen einzelnen Stellparameter umfasst.

3. Anordnung nach Anspruch 1, **dadurch gekennzeichnet, dass** der Steuerbefehl eine Mehrzahl von Stellparametern umfasst.

4. Anordnung nach Anspruch 1 oder 3, **dadurch gekennzeichnet, dass** die Steuergröße eine Mehrzahl von Stellparametern umfasst.

5. Anordnung nach einem der Ansprüche 2 bis 4, **dadurch gekennzeichnet, dass** die Stellparameter der Steuergröße die Frequenz des elektrischen Netzes, die Wirkleistung, die Blindleistung, die Spannung des elektrischen Netzes und/oder die Scheinleistung umfassen.

6. Anordnung nach einem der Ansprüche 2 bis 5, **dadurch gekennzeichnet, dass** die Stellparameter des Steuerbefehls eine Regionalkennung umfassen.

7. Anordnung nach einem der Ansprüche 1 bis 6, **dadurch gekennzeichnet, dass** in einer Übergabelogik (33) eine den Zusammenhang zwischen einem Steuerbefehl und einer Steuergröße repräsentierende Kennlinie hinterlegt ist.

8. Anordnung nach einem der Ansprüche 1 bis 7, **dadurch gekennzeichnet, dass** die Umschalteinrichtung (34) dazu ausgelegt ist, in Abhängigkeit von Steuersignalen zwischen den Übergabelogiken (33) umzuschalten.

9. Anordnung nach Anspruch 8, **dadurch gekennzeichnet, dass** die Umschalteinrichtung (34) fernbedienbar ist.

10. Anordnung nach einem der Ansprüche 1 bis 9, **dadurch gekennzeichnet, dass** die Anzahl der Übergabelogiken (33) in dem Übergabemodul (30) veränderbar ist.

11. Anordnung nach einem der Ansprüche 1 bis 10, **dadurch gekennzeichnet, dass** sie eine Meldeeinrichtung (14, 64) für die verfügbare Blindleistung umfasst.

12. Anordnung nach einem der Ansprüche 1 bis 11, **dadurch gekennzeichnet, dass** die Steuereinheit die Steuereinheit (11) einer Windenergieanlage (10) ist.

13. Anordnung nach einem der Ansprüche 1 bis 12, **dadurch gekennzeichnet, dass** die Steuereinheit die Steuereinheit (61) eines Parkmasters (60) ist.

14. Verfahren zum Betreiben einer Windenergieanlage (10) oder eines Windparks (50), wobei die Windenergieanlage (10) bzw. der Windpark (50) mit einer Steuereinheit (11, 61) gesteuert werden, mit den folgenden Schritten:
a. Feststellen der Steuergrößen, für die die Steuereinheit (11, 61) ausgelegt ist;
b. Feststellen der für die Steuereinheit (11, 61) bestimmten Steuerbefehle;
c. Auswählen einer Übergabelogik (33) aus einer Mehrzahl von in einem Übergabemodul (30) zur Verfügung gestellten Übergabelogiken (33), wobei die Übergabelogiken (33) dazu ausgelegt sind, die Steuerbefehle in die Steuergrößen umzuwandeln.

15. Verfahren nach Anspruch 14, **gekennzeichnet durch** fernbedientes Aktivieren der ausgewählten Übergabelogik (33).

## Claims

1. Arrangement for operation of a wind energy installation (10) or of a wind farm (50), comprising a control unit (11, 61) which processes control variables, and a transfer module (30) having an input interface (31) for receiving control commands and having an output interface (32) for transmitting control variables to the control unit (11, 61), **characterized in that** the transfer module (30) has a plurality of transfer logic elements (33), wherein each transfer logic element (33) is designed to convert a control command to a control variable, and **in that** the transfer module (33) has a switching device (34) for switching between the transfer logic elements (33).

2. Arrangement according to Claim 1, **characterized in that** the control command comprises a single actuating parameter, and **in that** the control variable comprises a single actuating parameter.

3. Arrangement according to Claim 1, **characterized in that** the control command comprises a plurality of actuating parameters.

4. Arrangement according to Claim 1 or 3, **characterized in that** the control variable comprises a plurality of actuating parameters.

5. Arrangement according to one of Claims 2 to 4, **characterized in that** the actuating parameters of the control variable comprise the frequency of the electrical grid, the real power, the reactive power, the voltage of the electrical grid and/or the volt amperes.

6. Arrangement according to one of Claims 2 to 5, **characterized in that** the actuating parameters of the control command comprise a regional identification.

7. Arrangement according to one of Claims 1 to 6, **characterized in that** a characteristic which represents the relationship between a control command and a control variable is stored in a transfer logic element (33) .

8. Arrangement according to one of Claims 1 to 7, **characterized in that** the switching device (34) is designed to switch between the transfer logic elements (33) as a function of control signals.

9. Arrangement according to Claim 8, **characterized in that** the switching device (34) is remotely controllable.

10. Arrangement according to one of Claims 1 to 9, **characterized in that** the number of transfer logic elements (33) in the transfer module (30) is variable.

11. Arrangement according to one of Claims 1 to 10, **characterized in that** the arrangement has a signaling device (14, 64) for the available reactive power.

12. Arrangement according to one of Claims 1 to 11, **characterized in that** the control unit is the control unit (11) of a wind energy installation (10).

13. Arrangement according to one of Claims 1 to 12, **characterized in that** the control unit is the control unit (61) of a farm master (60).

14. Method for operation of a wind energy installation (10) or of a wind farm (50), wherein the wind energy installation (10) and the wind farm (50) are controlled by a respective control unit (11, 61), having the following steps:
a. Definition of the control variables for which the control unit (11, 61) is designed;
b. Definition of the control commands which are intended for the control unit (11, 61);
c. Selection of one transfer logic element (33) from a plurality of transfer logic elements (33) which are available in a transfer module (30), wherein the transfer logic elements (33) are designed to convert the control commands to the control variables.

15. Method according to Claim 14, **characterized by** remotely controlled activation of the selected transfer logic element (33).

## Revendications

1. Dispositif d'utilisation d'une éolienne (10) ou d'un parc d'éoliennes (50), comportant une unité de commande (11, 61) traitant des grandeurs de commande et un module de transfert (30) équipé d'une interface d'entrée (31) pour recevoir des ordres de commande et d'une interface de sortie (32) pour transmettre des grandeurs de commande à l'unité de commande (11, 61), **caractérisé en ce que** le module de transfert (30) comprend une pluralité de logiques de transfert (33), chaque logique de transfert (33) étant conçue pour transformer un ordre de commande en une grandeur de commande, et **en ce que** le module de transfert (33) comprend un dispositif de commutation (34) pour la commutation entre les logiques de transfert (33).

2. Dispositif selon la revendication 1, **caractérisé en ce que** l'ordre de commande comprend un seul paramètre de réglage et **en ce que** la grandeur de commande comprend un seul paramètre de réglage.

3. Dispositif selon la revendication 1, **caractérisé en ce que** l'ordre de commande comprend une pluralité de paramètres de réglage.

4. Dispositif selon la revendication 1 ou 3, **caractérisé en ce que** la grandeur de commande comprend une pluralité de paramètres de réglage.

5. Dispositif selon l'une quelconque des revendications 2 à 4, **caractérisé en ce que** les paramètres de réglage de la grandeur de commande comprennent la fréquence du réseau électrique, la puissance active, la puissance réactive, la tension du réseau électrique et/ou la puissance apparente.

6. Dispositif selon l'une quelconque des revendications 2 à 5, **caractérisé en ce que** les paramètres de réglage de l'ordre de commande comprennent un code régional.

7. Dispositif selon l'une quelconque des revendications 1 à 6, **caractérisé en ce qu'**on a placé, dans une logique de transfert (33), une caractéristique représentant le lien entre un ordre de commande et une grandeur de commande.

8. Dispositif selon l'une quelconque des revendications 1 à 7, **caractérisé en ce que** le dispositif de commutation (34) est conçu pour réaliser la commutation entre les logiques de transfert (33) en fonction des signaux de commande.

9. Dispositif selon la revendication 8, **caractérisé en ce que** le dispositif de commutation (34) peut être commandé à distance.

10. Dispositif selon l'une quelconque des revendications 1 à 9, **caractérisé en ce que** le nombre de logiques de transfert (33) peut être modifié dans le module de transfert (30).

11. Dispositif selon l'une quelconque des revendications 1 à 10, **caractérisé en ce qu'**il comprend un dispositif de signalisation (14, 64) pour la puissance réactive disponible.

12. Dispositif selon l'une quelconque des revendications 1 à 11, **caractérisé en ce que** l'unité de commande est l'unité de commande d'une éolienne (10).

13. Dispositif selon l'une quelconque des revendications 1 à 12, **caractérisé en ce que** l'unité de commande est l'unité de commande (61) d'un système de gestion du parc (60).

14. Procédé d'utilisation d'une éolienne (10) ou d'un parc d'éoliennes (50), l'éolienne (10) ou le parc d'éoliennes (50) étant commandés à l'aide d'une unité de commande (11, 61), comportant les étapes suivantes :
a. la détermination des grandeurs de commande pour lesquelles l'unité de commande (11, 61) est conçue,
b. la détermination des ordres de commande déterminés pour l'unité de commande (11, 61),
c. la sélection d'une logique de transfert (33) dans une pluralité de logiques de transfert (33) mises à disposition dans un module de transfert (30), les logiques de transfert (33) étant conçues pour transformer les ordres de commande en grandeurs de commande.

15. Procédé selon la revendication 14, **caractérisé par** l'activation à distance de la logique de transfert (33) sélectionnée.
